# EUROPEAN PATENT APPLICATION

(11) **EP 2 019 480 A2**
(43) Date of publication of application: **28.01.2009**
(21) Application number: 08157229.9
(22) Date of filing: 29.05.2008
(51) Int. Cl.: H02M 3/158

(54) **Power supply circuit of image display apparatus**

(30) Priority: 27.07.2007 KR 20070075672
(71) Applicant: Samsung Electronics Co., Ltd., Suwon-si, Gyeonggi-do 442-742 (KR)
(72) Inventor: KIM, Tae-hoon, Suwon-si (KR); YANG, Joon-hyun 208-303 Unam First Ville Apartment, 1247, Gyeonggi-do Suwon-si (KR)
(74) Representative: Waddington, Richard

(57) **Abstract**

A power supply circuit of an image display apparatus is provided. The power supply circuit uses a single DC-DC converter (180), and is capable of supplying low voltage when the image display apparatus is in standby mode, and supplying high voltage as required when the image display apparatus is in operating mode. As a result, power consumption and manufacturing costs are reduced.

## Description

### BACKGROUND OF THE INVENTION

### 1. Field of the Invention

Circuits consistent with the present invention relate to a power supply circuit, and more particularly, to a power supply circuit of an image display apparatus which supplies power both in standby and operation modes.

### 2. Description of the Related Art

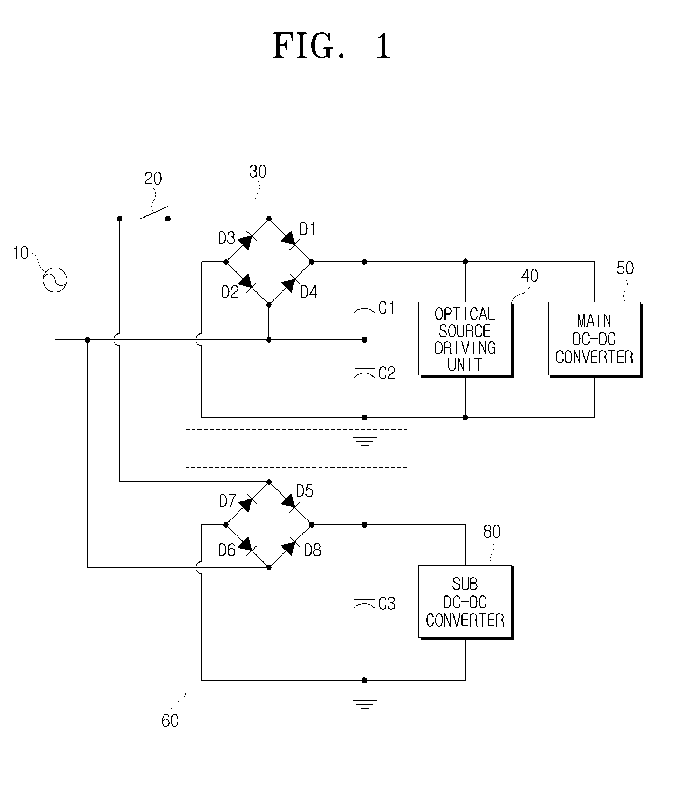

An image display apparatus such as a digital light processing (DLP) apparatus, a projector, a liquid crystal display (LCD), or a plasma display panel (PDP) requires high voltage to process and display an image signal on screen. Such an image display apparatus maintains a standby state that uses lower voltage, when the apparatus is not operated. A power supply circuit operates to supply power according to operational modes of an image display apparatus. The power supply circuit will be explained below with reference to FIG. 1.

FIG. 1 illustrates the structure of a power supply circuit used in a related art image display apparatus.

Referring to FIG. 1, an image display apparatus receives power from an external AC power source 10, and includes a switch 20, a first rectifier 30, an optical source driving unit 40, a main DC-DC converter 50, a second rectifier 60, and a sub DC-DC converter 80.

In standby mode, power from the AC power source 10 is fed to the sub DC-DC converter 80 through the second rectifier 60. In the standby mode, the switch 20 is off, and the second rectifier receives AC voltage from the AC power source 10 by four diodes D5, D6, D7, D8, connected in a bridge circuit, and a capacitor C3 and outputs the AC voltage into a DC voltage. The DC voltage from the second rectifier 60 is fed to the sub DC-DC converter 80.

When the image display apparatus starts operating, turning on the switch 20, the voltage from the AC power source 10 is fed to the optical source driving unit 40 and the main DC-DC converter 50 through the first rectifier 30. Accordingly, AC voltage of the AC power source 10 is output as a DC voltage through four diodes D1, D2, D3, D4 in a bridge circuit and two voltage doubler capacitors C1, C2.

As explained above, a related image display apparatus uses a separate sub DC-DC converter 80 in a standby mode, and the manufacturing cost is thus increased. The sub DC-DC converter 80 may be omitted to reduce the manufacturing cost, but this will lead to increased power consumption.

SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a power supply circuit of an image display apparatus capable of discriminating a standby mode and an operating mode and supplying voltage according to the determined mode, using a single DC-DC converter, which consumes less power and is economical.

According to an aspect of the present invention, there is provided a power supply circuit, including a voltage converter which outputs a voltage suitable for a standby state and an operating state, a rectifier which converts an AC voltage being fed from an external AC power source into a DC voltage and outputs the DC voltage to the voltage converter, in the standby state, and a diode unit which prevents ingress of the DC voltage being output from the rectifier into another circuit.

An anode of the diode unit may be connected to the other circuit, and a cathode of the diode unit may be connected to the voltage converter, thereby preventing ingress of the DC voltage to the other circuit.

The rectifier may include a first diode, of which an anode is connected to the AC power source and a cathode is connected to the voltage converter, and which is turned ON when (+) voltage is supplied from the AC power source, and a capacitor which is charged when the first diode is ON, and which outputs the charged voltage to the voltage converter when (-) voltage is supplied from the AC power source.

The power supply circuit may further include a main rectifier which steps up an AC voltage being supplied from the AC power source into a DC voltage and outputs the DC voltage as a high voltage, in the operating state, and a driving unit which drives according to the high voltage received from the main rectifier.

An anode of the diode unit may be connected to the driving unit, and a cathode of the diode unit may be connected to the voltage converter, thereby preventing ingress of the DC voltage to the driving unit.

The present invention also provides an image display apparatus, including a voltage converter which outputs voltage necessary for a standby mode and an operating mode, a rectifier which converts an AC voltage being fed from an external AC power source into a DC voltage and outputs the DC voltage to the voltage converter, in the standby state, and a diode unit which prevents ingress of the DC voltage being output from the rectifier into another circuit.

An anode of the diode unit may be connected to the other circuit, and a cathode of the diode unit may be connected to the voltage converter, thereby preventing ingress of the DC voltage to the another circuit.

The rectifier may include a first diode, of which an anode is connected to the AC power source and a cathode is connected to the voltage converter, and which is turned ON when (+) voltage is supplied from the AC power source, and a capacitor which is charged when the first diode is ON, and which outputs the charged voltage to the voltage converter when (-) voltage is supplied from the AC power source.

The image display apparatus may further include a main rectifier which steps up an AC voltage being supplied from the AC power source into a DC voltage and outputs the DC voltage as a high voltage, in the operating state, and a driving unit which drives according to the high voltage received from the main rectifier.

An anode of the diode unit may be connected to the driving unit, and a cathode of the diode unit may be connected to the voltage converter, thereby preventing ingress of the DC voltage to the driving unit.

The image display apparatus may be one of a liquid crystal display (LCD), a digital light processing (DLP) apparatus, and a projector.

BRIEF DESCRIPTION OF THE DRAWINGS

The above and other aspects of the present invention will be more apparent from the following detailed description of exemplary embodiments with reference to the accompanying drawings, in which:

FIG. 1 illustrates the structure of a power supply circuit used in a related art image display apparatus;

FIG. 2 illustrates the structure of a power supply circuit used in an image display apparatus according to an exemplary embodiment of the present invention; and

FIGS. 3A and 3B illustrate waveforms to explain the operation of a power supply circuit according to an exemplary embodiment of the present invention.

Throughout the drawings, the same drawing reference numerals will be understood to refer to the same elements, features, and structures.

DETAILED DESCRIPTION OF EXEMPLARY EMBODIMENTS

Details provided in the disclosure, such as construction details and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

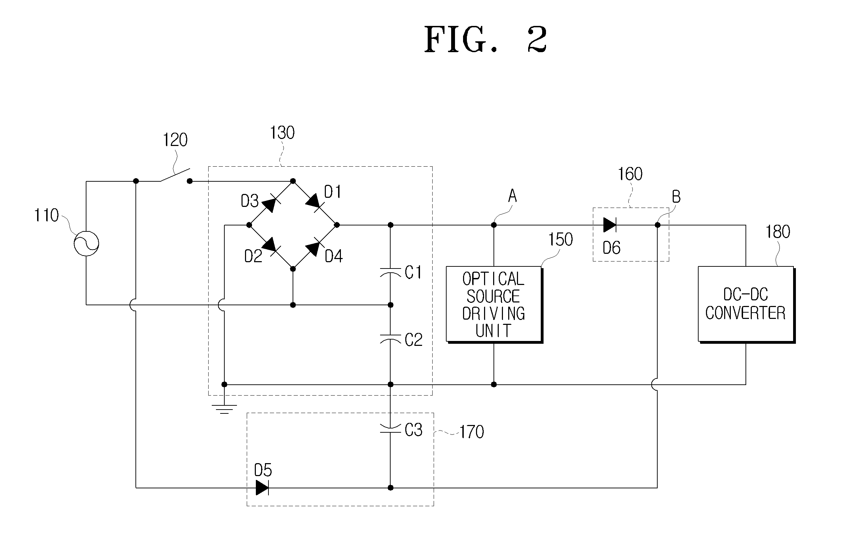

FIG. 2 illustrates the structure of a power supply circuit used in an image display apparatus according to an exemplary embodiment of the present invention.

Referring to FIG. 2, an image display apparatus receives power from an external AC power source 110, and includes a switch 120, a first rectifier 130, an optical source driving unit 150, a diode unit 160, a second rectifier 170, and a DC-DC converter 180.

When the switch 120 is turned off and the image display apparatus goes into a standby state, AC voltage of the AC power source 110 is supplied to the DC-DC converter 180 as a DC voltage through the second rectifier 170. Conversely, when the switch 120 is turned on, AC voltage of the AC power source 110 is supplied to the optical source driving unit 150 and the DC-DC converter 180 as DC voltage through the first rectifier 130.

When the image display apparatus is in a standby state, the first diode D5 is ON when (+) voltage is supplied from the AC power source 110. That is, because an anode of the first diode D5 is connected to the AC power source 110, and a cathode of the first diode D5 is connected with the DC-DC converter 180, the first diode D5 is turned ON when (+) voltage is supplied from the AC power source 110.

Accordingly, the capacitor C3 is charged with (+) voltage fed from the AC power source 110, and as a result, a DC voltage is supplied to the DC-DC converter 180. The first diode D5 is turned OFF when (-) voltage is supplied from the AC power source 110. Accordingly, voltage charged at the capacitor C3 is supplied to the DC-DC converter 180. At this time, the second diode D6 is turned OFF, preventing DC voltage being supplied to the DC-DC converter 180 from being leaked to circuits other than the DC-DC converter 180.

An anode of the second diode D6 is connected to the optical source driving unit 150, and a cathode of the second diode D6 is connected to the DC-DC converter 180, to thus prevent power supply to the optical source driving unit 150 in standby state.

If the image display apparatus is in operation, the switch 120 is ON, and AC voltage of the AC power source 110 is output as DC voltage through the first rectifier 130, the two capacitors C1, C2 step up the voltage being output from the four bridge diodes D1, D2, D3, D4 according to the capacitance thereof and output high voltage.

The output high voltage is supplied to the optical source driving unit 150 and the DC-DC converter 180. Herein, because A node has higher voltage than B node, the second diode D6 is turned ON to supply the high voltage being output from the first rectifier 130 to the DC-DC converter 180.

The second diode D6 is turned OFF when the image display apparatus is in a standby state, preventing voltage from the AC power source 110 from being supplied to circuits that require high voltage such as optical source driving unit 150. The second diode D6 is turned On when the image display apparatus is in operating mode, causing DC voltage to be supplied to the DC-DC converter 180 through the first rectifier 130.

In FIG. 2, the first rectifier 130 may be constructed based on power factor correction (PFC), instead of employing two capacitors C1, C2.

The image display apparatus may be implemented as an apparatus that employs a light source, such as, for example, a liquid crystal display (LCD), a digital light processing (DLP) apparatus, or a projector. Alternatively, the image display apparatus may be implemented as an apparatus that does not employ a light source, such as, for example, a plasma display panel (PDP) or a cathode-ray tube (CRT).

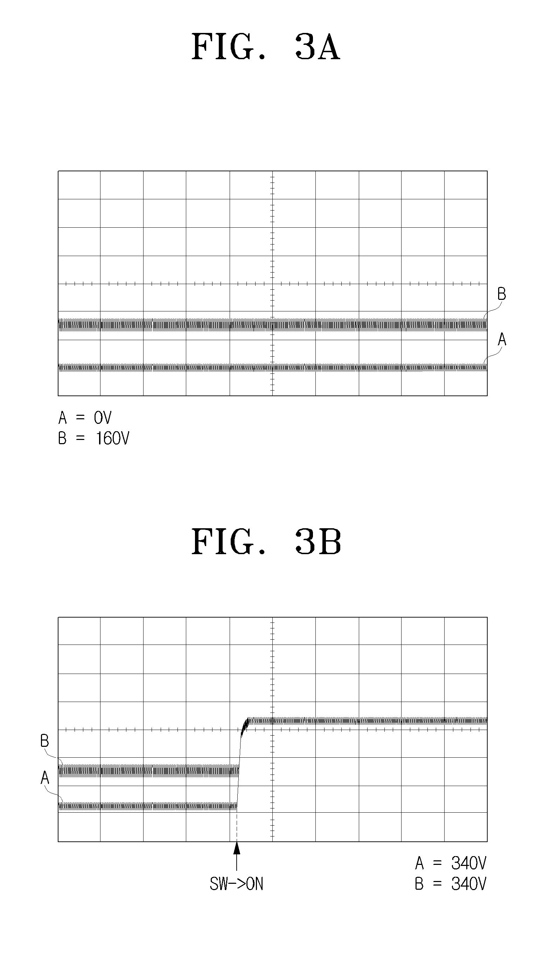

FIGS. 3A and 3B illustrate waveforms to explain the operation of a power supply circuit according to an exemplary embodiment of the present invention.

FIG. 3A particularly shows the waveform of DC voltage at A and B nodes when the image display apparatus is in standby mode. In standby mode, the second diode (D6) is OFF, and A and B nodes have different levels of DC voltage. Specifically, if AC voltage of 120V is supplied from the AC power source 110, the second diode D6 shunts off the voltage, causing A node to have 0V of DC voltage and B node to have 160V of DC voltage.

FIG. 3B particularly shows the waveform of DC voltage when the image display apparatus is in operating mode. Because the second diode D6 is ON in the operating state, A and B nodes have the same level of DC voltage. Specifically, because voltage being output from the first rectifier 130 is larger than voltage being output from the first diode D5 and the capacitor C3, the second diode D6 is turned ON. As a result, if AC voltage of 120V is supplied from the AC power source 110, A and B nodes have the same level of DC voltage, that is 340V.

As explained above, the exemplary embodiments of the present invention employ a single DC-DC converter in supplying power, by discriminatingly supplying power according to standby and operating modes of the image display apparatus. As a result, power consumption and manufacturing costs decrease.

While certain exemplary embodiments of the present invention have been shown and described with reference to certain exemplary embodiments thereof, it will be understood by those skilled in the art that various changes in form and details may be made therein without departing from the scope of the invention as defined by the appended claims and their equivalents

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A power supply circuit, comprising:
a voltage converter (180) which respectively outputs voltages suitable for a standby state and an operating state;
a rectifier (170) which converts an AC voltage being fed from an external AC power source into a first DC voltage and outputs the first DC voltage to the voltage converter (180), in the standby state; and
a diode unit (160) which prevents ingress of the first DC voltage being output from the rectifier (170) into a specified circuit.

2. The power supply circuit of claim 1, wherein an anode of the diode unit (160) is connected to the specified circuit, and a cathode of the diode unit (160) is connected to the voltage converter (180), thereby preventing ingress of the first DC voltage to the specified circuit.

3. The power supply circuit of claim 1 or claim 2, wherein the rectifier (170) comprises:
a first diode (D5), of which an anode is connected to the AC power source and a cathode is connected to the voltage converter (180), and which is turned ON when positive (+) voltage is supplied from the AC power source; and
a capacitor (C3) which is charged when the first diode (D5) is ON, and which outputs the charged voltage to the voltage converter (180) when negative (-) voltage is supplied from the AC power source.

4. The power supply circuit of claim 2 or claim 3, further comprising:
a main rectifier (170) which steps up the AC voltage being supplied from the AC power source into a second DC voltage and outputs the second DC voltage as a high voltage, in the operating state; and
a driving unit (150) which drives according to the high voltage received from the main rectifier (170).

5. The power supply circuit of claim 4, wherein an anode of the diode unit (160) is connected to the driving unit (150), and a cathode of the diode unit (160) is connected to the voltage converter (180), thereby preventing ingress of the DC voltage to the driving unit (150).

6. An image display apparatus, comprising:
a voltage converter (180) which outputs respective voltages appropriate for a standby mode and an operating mode;
a rectifier (170) which converts an AC voltage being fed from an external AC power source into a first DC voltage and outputs the first DC voltage to the voltage converter (180), in the standby state; and
a diode unit (160) which prevents ingress of the DC voltage being output from the rectifier (170) into a specified circuit.

7. The image display apparatus of claim 6, wherein an anode of the diode unit (160) is connected to the specified circuit, and a cathode of the diode unit (160) is connected to the voltage converter (180), thereby preventing ingress of the DC voltage to the specified circuit.

8. The image display apparatus of claim 6 or claim 7, wherein the rectifier (170) comprises:
a first diode (D5), of which an anode is connected to the AC power source and a cathode is connected to the voltage converter (180), and which is turned ON when positive (+) voltage is supplied from the AC power source; and
a capacitor (C3) which is charged when the first diode (D5) is ON, and which outputs the charged voltage to the voltage converter (180) when negative (-) voltage is supplied from the AC power source.

9. The image display apparatus of claim 7, further comprising:
a main rectifier (170) which steps up the AC voltage being supplied from the AC power source into a second DC voltage and outputs the second DC voltage as a high voltage, in the operating state; and
a driving unit (150) which drives according to the high voltage received from the main rectifier (170).

10. The image display apparatus of claim 9, wherein an anode of the diode unit (160) is connected to the driving unit (150), and a cathode of the diode unit (160) is connected to the voltage converter (180), thereby preventing ingress of the DC voltage to the driving unit (150).

11. The image display apparatus of any one of claims 6 to 10, wherein the image display apparatus is one of a liquid crystal display (LCD), a digital light processing (DLP) apparatus, and a projector.
